# EUROPÄISCHE PATENTSCHRIFT

(11) **EP 0 641 730 B1**
(45) Veröffentlichungstag und Bekanntmachung des Hinweises auf die Patenterteilung: **27.05.1998**
(21) Anmeldenummer: 94112393.7
(22) Anmeldetag: 09.08.1994
(51) Int. Cl.: B65G 47/90, B65G 47/244

(54) **Montageband mit Umsetzeinrichtung**
Assembly conveyor with transfer equipment
Convoyeur de montage avec dispositif de transfert

(30) Priorität: 04.09.1993 DE 9313348 U
(43) Veröffentlichungstag der Anmeldung: 08.03.1995
(73) Patentinhaber: Gebhardt Fördertechnik GmbH, D-74889 Sinsheim (DE)
(72) Erfinder: Gebhardt, Günter, D-74915 Waibstadt (DE)
(74) Vertreter: Schmid, Rudolf, Dipl.-Ing., Patentanwalt

(56) Entgegenhaltungen:
- WO-A-92/04259
- DE-C- 3 907 566
- DE-C- 4 111 087
- DE-U- 9 313 348
- FR-A- 2 667 046
- GB-A- 2 010 138

## Beschreibung

Die Erfindung betrifft ein Montageband mit einer Umsetzeinrichtung nach dem Oberbegriff des Anspruchs 1.

Montagebänder bestehen aus kontinuierlichen oder taktgesteuerten Transfermitteln, die ein Montageobjekt von einem zum anderen Arbeitsplatz bewegen. Je nach den örtlichen Begebenheiten ist es nun oftmals nicht möglich, alle erforderlichen Montagearbeitsplätze hintereinander, d.h. linear anzuordnen.

Unabhängig davon, ob es sich bei den einzelnen Montagearbeitsplätzen um manuelle oder voll automatische Montagepositionen handelt, bedarf es unter Umständen einer bestimmten, nicht veränderlichen Position des Montageobjektes auf dem Montageband bzw. zum Monteuer oder der automatischen Einrichtung. Wenn nun die Montagearbeitsplätze gegenüber liegen, d.h. auf einem durch zwei gegenläufige Montagebahnen gebildeten Montageband, genügt ein einfaches Umsetzen des Montageobjektes ohne dieses zu verdrehen nicht, da dann der gegenüberliegende Monteur das Montageobjekt von der falschen Seite aus bearbeiten müßte.

Zum Zwecke der Verdrehung des Montageobjektes gibt es die verschiedensten Einrichtungen. Dies können einerseits Hebeeinrichtungen oder Drehteller sein, die sich jedoch im Zusammenspiel mit den Transfermitteln in einer aufwendigen Konstruktion ergeben, da die geradlinig bewegten Montageobjekte quer verfahren werden müssen, um die Dreheinrichtung zu erreichen.

Wo-A-92 04259 offenbart eine Umlenkstation für Förderbänder mit zwei gegenüberliegenden Bahnen. Zwischen den beiden Förderbahnen ist eine sich in Förderrichtung drehende Drehscheibe vorgesehen. Der Transport eines Werkstückträgers durch eine Drehscheibe erfolgt mittels der zwischen beiden wirkenden Reibungskraft. Der Werkstückträger wird seitlich geführt. Nachteilig bei diesem Stand der Technik ist es, daß der Werkstückträger mittels Reibung transportiert wird, da dies zu erfahrungsgemäß sehr unterschiedlichen Transportergebnissen führt, d. h. je nach aufliegendem Gewicht, aufliegender Fläche, Temperatur und Reibungskoeffizienten ergeben sich z. B. unterschiedliche Transportgeschwindigkeiten. Die Reibung führt zu Erhitzung, Verschleiß, viel Lärm (Quietschen) und erhöhtem Antriebsbedarf. Es bedarf im genannten Stand der Technik drei verschiedener angetriebener Vorrichtungen zum Umlenken: einer Drehscheibe und zweier in entgegengesetzter Richtung anzutreibender Längsfördermittel. Überdies sind noch seitliche Führungsmittel erforderlich. Insgesamt ergibt sich, daß der genannte Stand der Technik zum Umlenken viele Einzelkomponenten erfordert, die kompliziert über Getriebe miteinander zu verbinden sind und der genannte Stand der Technik weist die bekannten Nachteile von reibschlüssigen Antrieben auf.

FR-A-2 667 046 offenbart eine Schwenkeinrichtung für Lebensmittel, die auf einem Transportband einer Verpackungsmaschine zugeführt werden. Die Schwenkeinrichtung führt in der selben Richtung, wie das Transportband, wobei das Produkt in der gleichen Richtung geführt wird. In der FR-A-2 667 046 wird kein Hinweis gegeben auf das Umsetzen auf einander gegenüberliegende Montagebahnen.

Aus der DE-22 59 273 C2 ist eine Vorrichtung zum Umsetzen von Stückgut aus einer Rollenbahn mit Hilfe von mindestens einem quer zur Rollenbahn umlaufenden, antreibbaren und in einer Längsführung unterhalb des Stückgutes geführten Zugmittel bekannt, wobei das Stückgut angehoben und seitlich aus dem Bereich der Rollenbahn transportiert wird, indem an dem Zugmittel mindestens zwei mit Abstand hintereinander angeordnete Mitnehmer vorgesehen sind, denen in der Längsführung je eine eigene, erhöhte und sich längs der Ausschleusbahn erstreckende Nockenbahn zum gleichzeitigen Anheben und Absenken des Stückgutes zugeordnet ist.

In vorliegendem Falle ist das Stückgut mit dem Montageobjekt gleichzusetzen, wobei es gilt, das Montageobjekt bzw. das Stückgut einer von der linearen Transportrichtung abweichenden Förderrichtung zuzuführen. Ein zusätzliches Verdrehen des abgehobenen Montageobjektes ist gemäß dieser Vorrichtung jedoch nicht möglich.

Der vorliegenden Erfindung liegt daher die Aufgabe zugrunde, ein Montageband der eingangs genannten Gattung derart auszubilden, daß die Umsetzung des Montageobjektes unter montagegerechter Neupositionierung auf beispielsweise eine zur ersten Montagebahn gegenläufige Montagebahn unter Rotation umzusetzen, so daß die, der ersten Montagebahn gegenüberliegenden Montagearbeitsplätze die gleichen Montageverhältnisse gegenüber dem Montageobjekt antreffen, wie die Montagearbeitsplätze der ersten gegenüberliegenden Bahn.

Diese Aufgabe wird erfindungsgemäß durch ein Montageband nach dem vorgeschlagenen Anspruch 1 gelöst.

Besonders bevorzugte Ausführungsformen und Weiterbildungen der Erfindung sind in den Unteransprüchen gekennzeichnet.

Erfindungsgemäß ist nun vorgesehen, ein Montageband, das aus zwei gegenläufigen Montagebahnen besteht, an dem parallel gegenüberliegende Arbeitsplätze angeordnet sind, von denen aus manuell oder maschinell das Montageobjekt bearbeitet wird, und bei dem das Montageobjekt von der einen Montagebahn auf die gegenüberliegende Montagebahn umgesetzt werden muß, derart auszubilden, daß zum Zwecke der gleichen Montageposition des Montageobjektes dieses um 180 Grad bei der Umsetzung gedreht wird, in dem beispielsweise am Auslauf der ersten Montagebahn ein das Montageobjekt von der Montagebahn trennender, annähernd quer verfahrbarer Hubtisch angeordnet ist, welcher durch eine Hubbewegung das Montageobjekt von der Montagebahn abhebt und zur gegenüberliegenden Montagebahn transferiert und dabei mit Mitteln versehen ist, die eine Linearbewegung in eine Drehbewegung umsetzen. In einer besonders bevorzugten Ausführungsform der Erfindung ist vorgesehen, daß der Hubtisch eine Trägerplatte aufweist, die über einen Schwenkhebel mit dem umsetzenden Mittel in Wirkverbindung steht. Dabei ist die Trägerplatte auf einer Welle gelagert, welche von einem Schwenkhebel aufgenommen ist.

An dem gegenüberliegenden Ende des Schwenkhebels besitzt dieser einen Führungszapfen, welcher in die Steuerkurve einer sogenannten Kulissenplatte eingreift. Der Hubtisch selbst ist mit linearen Führungsmitteln versehen, die diesen, nach Abheben des Montageobjektes von der einen Montagebahn quer zu dieser verfährt, um es auf die gegenüberliegende parallele und gegenläufige Montagebahn abzusetzen. Bei dieser linearen Querbewegung des Hubtisches erfolgt die montagegerrechte Rotation des Montageobjektes.

Die Steuerkurve in der Kulissenplatte besitzt hierzu eine individuelle Arbeitslänge, welche sich annähernd quer zu den Montagebahnen entlang des linearen Verfahrweges des Hubtisches erstreckt. Erfindunsgemäß ist nun vorgesehen, daR die Steuerkurve einen ersten linearen Erstreckungsbereich und einen ersten Kurvensektor besitzt, der in einen Scheitelbereich führt und ein zweiter Kurvensektor aus dem Scheitelbereich in einen zweiten Linearbereich führt. Somit ergibt sich eine zirkuläre Erstreckung des ersten Kurvensektors von 90 °C mit positivem Wesen, während die zirkuläre Erstreckung des zweiten Kurvensektors negativ ausgebildet ist und ebenfalls 90 °C abdeckt. Der gesamte Steuersektor der Steuerkurve erstreckt sich über 180 °C. Die für die Rotationsumsetzung verantwortlichen Mittel, welche aie Linearbewegung in eine Drehbewegung umsetzen, bestehen aus dem Hubtisch mit dem linearen Führungsmitteln, welche über ein geeignetes Aktivierungsmittel beaufschlagt werden, um die Querverfahrbarkeit des Hubtisches zu gewährleisten.

Ferner ist eine Kulissenplatte mit vorgenannter Steuerkurve vorgesehen, sowie eine Trägerplatte mit Welle und einen Führungszapfen aufweisenden Schwenkhebel. Schwenkhebel und Trägerplatte sowie Kulissenplatte stehen dabei derart in Wirkverbindung, daß die Mittelachse der Welle der Trägerplatte einen linearen Verfahrweg aufweist. Der Schwenkhebel nimmt die Mittelachse der Welle der Trägerplatte und die Schwenkachse des Führungszapfens auf.

Der Führungszapfen und die Welle sind verdrehgesichert im oder am Schwenkhebel angeordnet, so daß der Abstand zwischen Schwenkachse und Mittelachse der Welle der Trägerplatte konstant fixiert ist. So wird es gewährleistet, daß sich die Rotationsbewegung der Welle der Trägerplatte gegenüber dem Verfahrweg des Führungszapfens in der Steuerkurve proportional verhält. Der Hubtisch besitzt zum Zwecke der Aufwärtsbewegung einen Hubbalg der von einer Scherenanordnung bei Aufwärtshub unterstützt wird. Zum Zwecke der Linearbewegung besitzt der Hubtisch einen Schlitten, an dem die, die Linearführungsmittel zusammen mit dem Hubtisch angeordneten Schienen bildende Kufen angeordnet sind. Auf dem Schlitten ist eine Kopfplatte angeordnet, die annähernd mittig von der Welle der Trägerplatte durchsetzt ist. Ferner besitzt die Kopfplatte eine Lagerschale, innerhalb der die Welle beispielsweise in Kugellagern drehbar gelagert ist. Die Linearbewegung wird durch die vorgenannten Aktivierungsmittel, welche auf den Schlitten einwirken vollzogen.

Anhand den beigefügten Zeichnungen, die ein besonders bevorzugtes Ausführungsbeispiel der Erfindung zeigen, wird diese nun näher beschrieben. Dabei zeigen:
- Figur 1: eine schematische Darstellung des erfindungsgemäßen Montagebandes in einer Seitenansicht;
- Figur 2: eine schematische Darstellung des erfindungsgemäßen Montagebandes in einer Draufsicht;
- Figur 3: eine teilweise geschnittene Darstellung der Erfindung aus der in Figur 4 angedeuteten Richtung A;
- Figur 4: ein Ausführungsbeispiel der Erfindung in einer Seitenansicht;
- Figur 5 und Figur 6: eine vergrößerte Darstellung der Figur 3 mit ausgefahrenem Hubtisch;
- Figur 7: das Detail nach Figur 6, jedoch mit eingefahrenem Hubtisch;
- Figur 8: eine teilweise aufgeschnittene Darstellung des Hubtisches;
- Figur 9: die Kulissenplatte mit Steuerkurve.

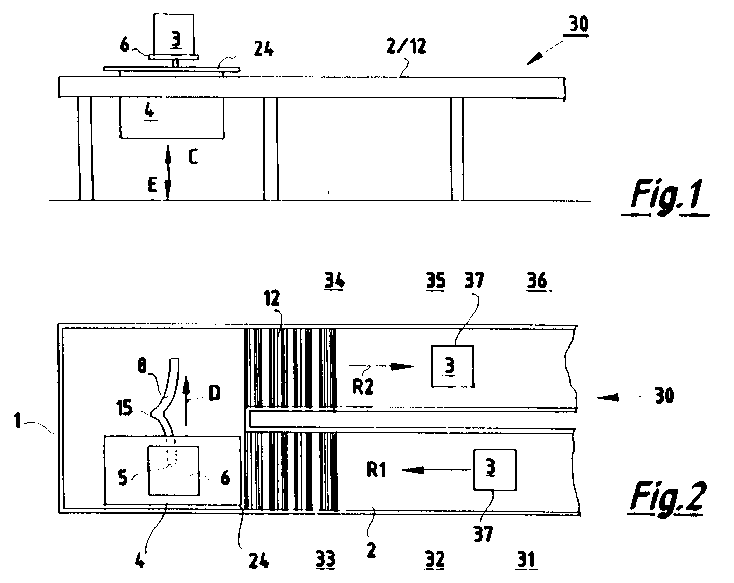

Die Figuren 1 und 2 zeigen schematische Darstellungen des erfindungsgemäßen-Montagebandes 30. Das Montageband 30 wird durch zwei gegenläufige Montagebahnen 2, 12 gebildet. Dies können Rollenbahnen und Kettenförderer oder dergleichen sein. Die Förderrichtung der Montagebahn 2 ist mit R1 und die der Montagebahn 12 mit R2 gekennzeichnet. Entlang den Montagebahnen 2 und 12 des Montagebandes 30 befinden sich gegenüberliegende parallele Montagearbeitsplätze, hier mit den Bezugszeichen 31 bis 36 gekennzeichnet. Entsprechend den jeweiligen Montageschritten wird nun das Montageobjekt 3 auf der ersten Montagebahn 2 in Pfeilrichtung R1 transferiert, um die einzelnen Montagearbeitsplätze 31, 32, 33 zum Zwecke der Bearbeitung zu erreichen.

Ist nun aufgrund räumlicher Beschränkungen die Länge des Montagebandes 30 begrenzt, so daß beispielsweise die Montagearbeitsplätze 34, 35, 36 nicht hinter den Montagearbeitsplätzen 31, 32, 33 positioniert werden können, so muß das Montageobjekt 3 am Auslauf 1 auf die gegenüberliegende Montagebahn 12 umgesetzt werden, deren Transportrichtung R2 gegenüber der Transportrichtung R1 der ersten Montagebahn gegenläufig ist.

Es ist nun oftmals erforderlich, daß die Zugänglichkeit des Montageobjektes 3 auf beiden Bahnen 2 und 12 in gleicher Weise gewährleistet ist. Dies bedeutet, daß das Montageobjekt 3 am Auslauf nicht nur durch Querförderer umgesetzt werden muß, sondern auch noch einer Rotation unterzogen wird, um die Montageseite 37 des Montageobjektes 3 wiederum in Richtung der Montagearbeitsplätze 31 bis 36 auszurichten. Erfindungsgemäß ist nun vorgesehen, daß das Montageobjekt 3 beim Verlassen der ersten Montagebahn 2 von einem am Auslauf 1 angeordneten Hubtisch 4 aufgenommen wird und in Pfeilrichtung C hochgesetzt wird. Sodann verfährt der Hubtisch 4 bzw. ein hieran angeordneter Schlitten 24 in Pfeilrichtung D, wobei über geeignete Mittel 5, welche in eine Steuerkurve 8 eingreifen, die Rotation der das Montageobjekt aufnehmenden Trägerplatte 6 in die gewünschte Montageposition erfolgt.

Erfindungsgemäß erfolgt bis zum Bereich des Kurvenscheitesl 15 eine Rotation des Montageobjektes 3 um 90 °C. Bei weiterrer Linearbewegung wird durch die Umsetzmittel 5 eine Anschlußrotation um weitere 90 °C vorgenommen, so daß letztlich das Montageobjekt 3 um 180 °C gedreht vor der Montagebahn 12 zu liegen kommt und nach Zurückfahren des Hubtisches in Pfeilrichtung E von der Montagebahn 12 übernommen werden kann.

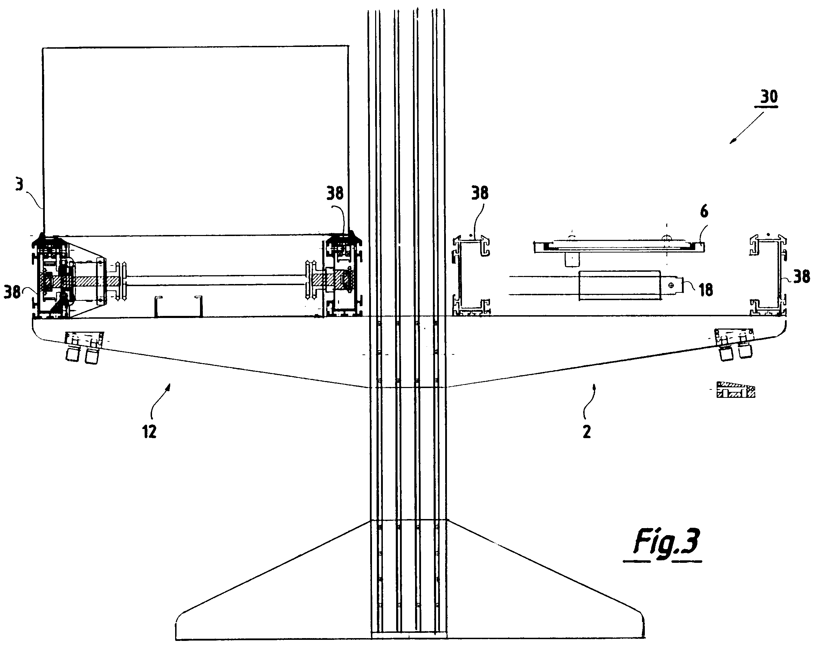

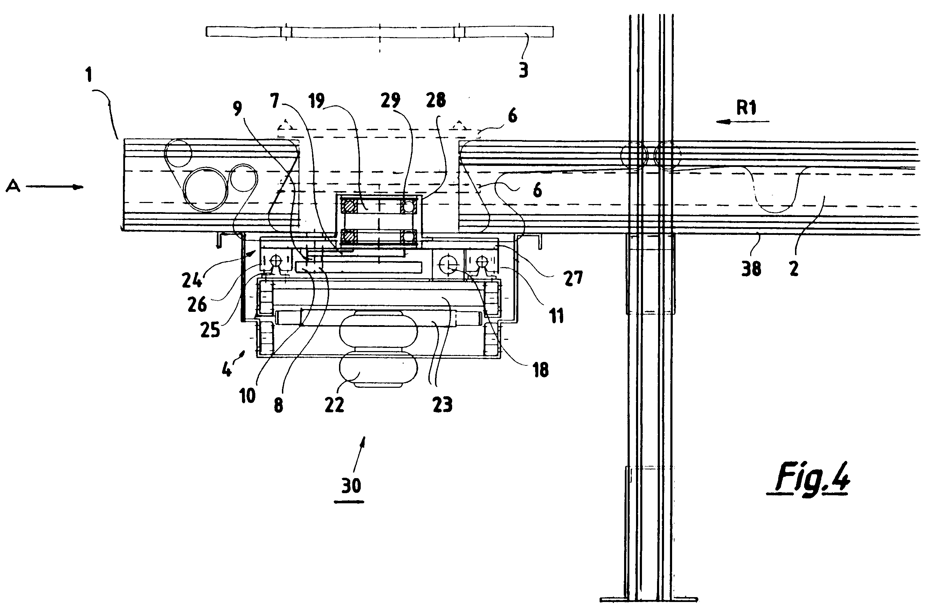

Anhand den Figuren 3 und 4 wird nun nachfolgend ein Ausführungsbeispiel der vorliegenden Erfindung beschrieben.

Das Montageband 30 ist in herkömmlicher Weise aus einem Rollen- oder Kettenförderer gebildet, welcher in Längsrichtung von beidseits liegenden, parallel positionierten Metallwangen 38 eingegrenzt ist. Das Montageband 30 wird in diesem Ausführungsbeispiel aus zwei gegenüberliegend parallel angeordneten Montagebahnen 2 und 12 gebildet, die gegenläufige Transportrichtungen besitzen. Ein auf der Montagebahn 2 befindliches Montageobjekt 3, das in Pfeilrichtung R1 bewegt wird, erreicht den, am Auslauf 1 angeordneten Hubtisch 4. Der Hubbalg 22 aktiviert die Aufwärtsbewegung der Schere 23, so daß die Trägerplatte 6 nach oben fährt und das Montageobjekt 3 nach oben abnimmt. Sodann wird über das lineare Aktivierungsmittel 18, dies kann beispielsweise ein Pneumatikzylinder sein, der Schlitten 24 quer zur Förderrichtung R1 bzw. R2 verfahren. Zum Zwecke der Schlittenführung sind hier lineare Führungsmittel 11 vorgesehen, die aus Schienen 25 und Kufen 26 gebildet sind.

Der Schlitten besitzt eine Kopfplatte 27, in der eine Lagerschale 28 aufgenommen ist, in welcher zur Aufnahme der Welle 19 der Trägerplatte 6 geeignete Kugellager 29 einesetzt sind. Unterhalb des Schlittens 24, d.h. zwischen seinen linearen Führungsmitteln 11 befindet sich eine Kulissenplatte 10, die eine zur Umsetzung der Linearbewegung in eine Drehbewegung mitverantwortliche Steuerkurve 8 aufweist.

In diese Steuerkurve 8 greift ein Führungszapfen 9 eines Schwenkhebels 7 ein, der wiederum, verdrehgesichert mit der Welle 19 der Trägerplatte 6 in Verbindung steht. Durch diese erfindungsgemäße Anordnung wird der Welle 19, die sich linear bewegt, die vom Schwenkhebel bzw. dessen Führungszapfen 9 erzeugte Rotation aufgezwungen. Durch das proportionale Verhalten des Verfahrweges der Welle 19 gegenüber dem Schwenkverhalten des Hebels 7 bzw. Führungszapfens 9 wird erreicht, daß die Welle 19 bzw. die Trägerplatte 6 unter Durchführung einer Linearbewegung eine Rotationsbewegung ausführt, was zur gewünschten Montageposition mit entsprechender, hier 180°C-Drehung der Trägerplatte 6 führt.

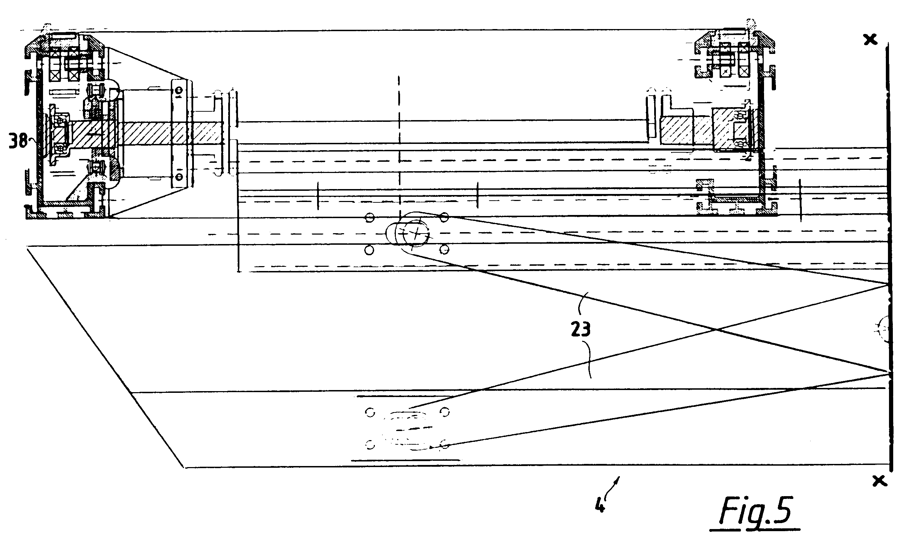

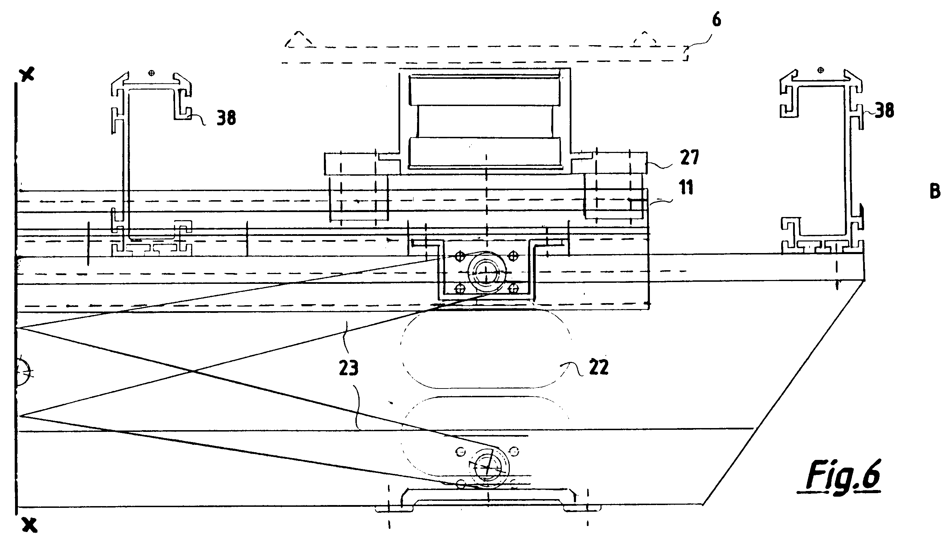

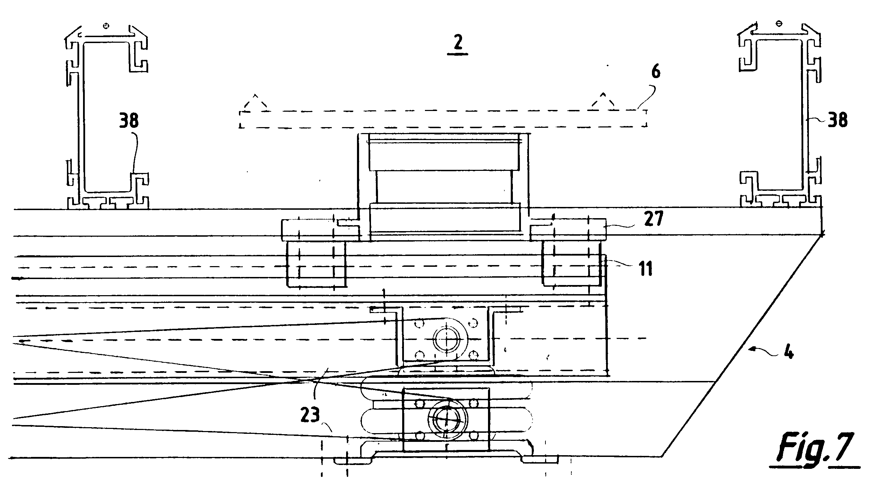

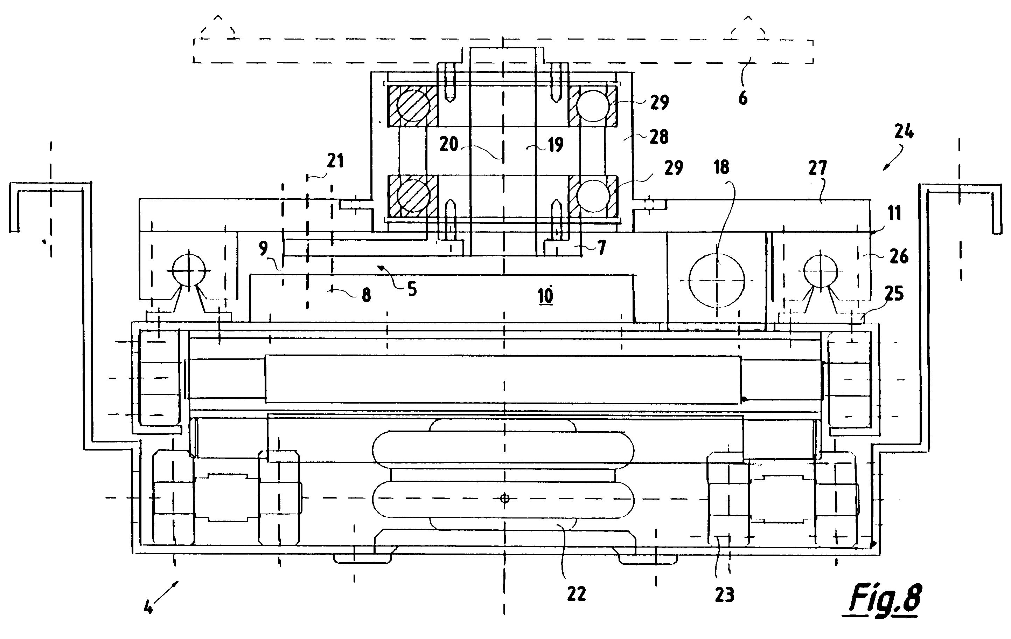

Die Figuren 5 und 6 sowie 7 und 8 zeigen das erfindungsgemäße Montageband in vergrößerten Darstellungen, wobei die Figur 5 und 6 an der Anschlaglinie X/X zusammengesetzt werden müssen.

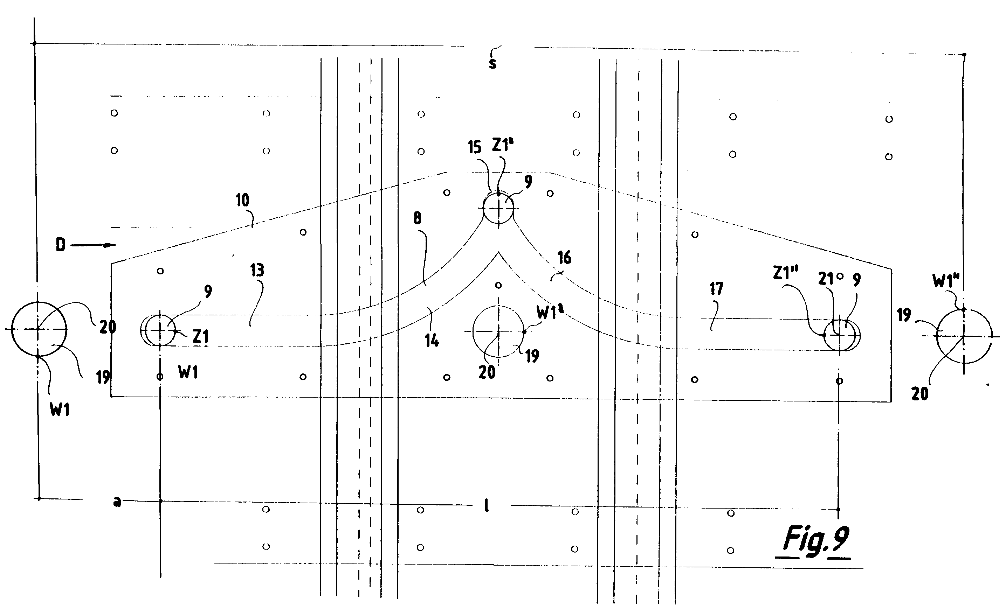

Die Figur 9 zeigt die Kulissenplatte 10. In dieser Kulissenplatte 10 ist die Steuerkurve 8 eingearbeitet. In die Steuerkurve 8 greift der Führungszapfen 9 ein. Die Arbeitslänge L der Steuerkurve 8 ist dabei für den erforderlichen linearen Verfahrweg, die die Trägerplatte 6 bzw. deren Welle 19 vorzunehmen hat, um die Trägerplatte 6 mit dem Montageobjekt 3 montagegerecht vor der nächsten Montagebahn 12 zu positionieren verantwortlich, um von dieser zum weiteren Transfer aufgenommen zu werden.

Die Steuerkurve 8 sieht einen ersten linearen Erstreckungsbereich 13 vor, in dem der Führungszapfen 9 seinen Anfangspunkt besitzt.

Der Abstand A zwischen Schwenkachse 21 des Führungszapfens 9 und der Mittelachse 20 der Welle 19 ist stets konstant. Der gesamte Verfahrweg S der Mittelachse 20 der Welle 19 ist erfindungsgemäß linear. Zur Verdeutlichung des Linear- und Rotationsverhaltens der Welle 19 bzw. des Zapfens 9 sind Orientierungspunkte W und Z gewählt. Wird nun der Schlitten quer in Pfeilrichtung D bewegt, vollzieht der Schwenkhebel mit seinem Führungszapfen 9 und seiner Welle 19 im Bereich des ersten linearen Erstreckungsbereiches 13 ebenfalls eine Linearbewegung. Bei Erreichen des ersten Kurvensektors 14 beginnt die Schwenkbewegung des Führungszapfens 9 unter gleichzeitiger Rotation der Welle 19, so daß bei Erreichen des Scheitelbereiches 15 die ursprünglichen Orientierungspunkte W1 und Z1 in der Position gemäß W1' und Z1' zu liegen kommen. Hier hat die Trägerplatte bereits eine 90°C-Drehung unter Beibehaltung einer Linearfortbewegung vollzogen. Durch weitere Linearbewegung des Schlittens verläßt der Führungszapfen 9 seine Position im Scheitelbereich 15 und tritt in den zweiten Kurvensektor 16 der Steuerkurve 8 ein. Auch hier erfolgt wiederum die Rotation der Welle 20, so daß nun ausweislich des Orientierungspunktes W1'' und Z1'' eine Lage der Trägerplatte 6 eingenommen wird. Bei dieser Position hat die Trägerplatte 6 eine 180°C -Drehung gegenüber der Ausgangsposition vorgenommen, wobei die Steuerkurve 8 einen letzten und zwar zweiten Linearbereich 17 besitzt.

Mit der vorliegenden Erfindung wird in überraschender Weise die Linearbewegung des Schlittens ausgenutzt, um ohne Rotationsteller, welche ein konstruktiv aufwendigen Einsatz mit sich ziehen, zu verwenden.

### Bezugszeichenliste

- 1: Auslauf
- 2: Montagebahn
- 3: Montageobjekt
- 4: Hubtisch
- 5: Umsetzmittel
- 6: Trägerplatte
- 7: Schwenkhebel
- 8: Steuerkurve
- 9: Führungszapfen
- 10: Kulissenplatte
- 11: lineare Führungsmittel
- 12: Montagebahn
- 13: erster linearer Erstreckungsbereich von 8
- 14: erster Kurvensektor von 8
- 15: Scheitelbereich von 8
- 16: zweiter Kurvensektor von 8
- 17: zweiter Linearbereich von 8
- 18: lineares Aktivierungsmittel
- 19: Welle
- 20: Mittelachse von 19
- 21: Schwenkachse von 9
- 22: Hubbalg
- 23: Schere
- 24: Schlitten
- 25: Schiene
- 26: Kufen
- 27: Kopfplatte
- 28: Lagerschale
- 29: Kugellager
- 30: Montageband
- 31: Montagearbeitsplatz
- 32: Montagearbeitsplatz
- 33: Montagearbeitsplatz
- 34: Montagearbeitsplatz
- 35: Montagearbeitsplatz
- 36: Montagearbeitsplatz
- 37: Montageseite von 3
- 38: Metallwangen

## Patentansprüche

1. Montageband mit parallel gegenüberliegenden Montagearbeitsplätzen (31-36), denen das zu bearbeitende Montageobjekt (3) entsprechend der Montageschritte zugeleitet wird, wobei diese parallel gegenüberliegenden Montagearbeitsplätze von zwei gegenläufigen Montagebahnen (2,12) des Montagebandes angefahren werden, und an mindestens einem Ende des Montagebandes ein Umsetzen des Montageobjektes (3) auf die jeweils gegenüberliegende gegenläufige Montagebahn erfolgt,
dadurch gekennzeichnet,
daß am Auslauf (1) der ersten Montagebahn (2) ein, das Montageobjekt (3) von der Montagebahn (2) trennender, annähernd quer verfahrbarer Hubtisch (4) angeordnet ist, der mit, eine Linearbewegung in eine Drehbewegung umsetzenden Mitteln (5) versehen ist.

2. Montageband nach Anspruch 1,
dadurch gekennzeichnet,
daß der Hubtisch (4) eine Trägerplatte (6) aufweist, die über einen Schwenkhebel (7) mit den umsetzenden Mitteln (5) in Wirkverbindung steht.

3. Montageband nach Anspruch 2,
dadurch gekennzeichnet,
daß die Trägerplatte (6) auf einer Welle (19) gelagert ist.

4. Montageband nach Anspruch 3,
dadurch gekennzeichnet,
daß der Schwenkhebel (7) an seinem einen Ende die, in die Trägerplatte (6) einragende Welle (19) und an seinem, von dieser Welle (19) beabstandeten Ende einen Führungszapfen (9) trägt, welcher in eine Steuerkurve (8) einer Kulissenplatte (10) eingreift.

5. Montageband nach Anspruch 4,
dadurch gekennzeichnet,
daß der Hubtisch (4) mit linearen Führungsmitteln (11) versehen ist.

6. Montageband nach Anspruch 5,
dadurch gekennzeichnet,
daß die Arbeitslänge (L) der Steuerkurve (8) sich annähernd quer zu den Montagebahnen (2,12) entlang des linearen Verfahrweges des Hubtisches (4) erstreckt.

7. Montageband nach Anspruch 6,
dadurch gekennzeichnet,
daß die Steuerkurve (8) einen ersten linearen Erstreckungsbereich (13) und einen ersten Kurvensektor (14) aufweist, der in einen Scheitelbereich (15) führt und einen zweiten Kurvensektor (16) aus dem Scheitelbereich (15) in einen zweiten Linearbereich (17) führt.

8. Montageband nach Anspruch 7,
dadurch gekennzeichnet,
daß die zirkuläre Erstreckung des ersten Kurvensektors (14) positiv ist und 90°C beträgt, während die zirkuläre Erstreckung des zweiten Kurvensektors (16) negativ ausgebildet ist und ebenfalls 90°C beträgt.

9. Montageband nach mindestens einem der Ansprüche 4 bis 8,
dadurch gekennzeichnet,
daß der Steuersektor über die Arbeitslänge (L) der Steuerkurve (8) 180°C beträgt.

10. Montageband nach mindestens einem der vorhergehenden Ansprüche 4-9,
dadurch gekennzeichnet,
daß die Mittel (5) zur Umsetzung einer Linearbewegung in eine Drehbewegung aus dem Hubtisch (4) mit über ein Aktivierungsmittel (18) beaufschlagbaren Linearführungsmitteln (11), der Kulissenplatte (10) mit Steuerkurve (8) sowie der Trägerplatte (6) mit Welle (19) und einem Führungszapfen (9) aufweisenden Schwenkhebel (7) besteht.

11. Montageband nach Anspruch 10,
dadurch gekennzeichnet,
daß die Mittelachse (20) der Welle (19) einen linearen Verfahrweg (S) aufweist.

12. Montageband nach mindestens einem der Ansprüche 4-11,
dadurch gekennzeichnet,
daß der Schwenkhebel (7) die Mittelachse (20) der Welle (19) und die Schwenkachse (21) des Führungszapfens (9) aufnimmt.

13. Montageband nach Anspruch 12,
dadurch gekennzeichnet,
daß der Führungszapfen (9) und die Welle (19) verdrehgesichert am Schwenkhebel (7) angeordnet sind.

14. Montageband nach mindestens einem der Ansprüche 4-13,
dadurch gekennzeichnet,
daß der Abstand (A) zwischen Schwenkachse (21) und Mittelachse (20) der Welle (19) konstant fixiert ist.

15. Montageband nach mindestens einem der Ansprüche 4 bis 14,
dadurch gekennzeichnet,
daß sich die Rotationsbewegung der Welle (19) gegenüber dem Verfahrweg des Führungszapfens (9) in der Steuerkurve (8) proportional verhält.

16. Montageband nach Anspruch 15,
dadurch gekennzeichnet,
daß der Hubtisch (4) einen Hubbalg (22) aufweist, der unterstützt von einer Schere (23) den Aufwärtshub aktiviert.

17. Montageband nach mindestens einem der Ansprüche 10 bis 15,
dadurch gekennzeichnet,
daß der Hubtisch (4) einen Schlitten (24) aufweist, an dem die, die Linearführungsmittel (11) zusammen mit am Hubtisch angeordneten Schienen (25) bildenden Kufen (26) angeordnet sind.

18. Montageband nach Anspruch 17,
dadurch gekennzeichnet,
daß der Schlitten (24) eine Kopfplatte (27) aufweist, die annähernd mittig von der Welle (19) der Trägerplatte (6) durchsetzt ist.

19. Montageband nach Anspruch 18,
dadurch gekennzeichnet,
daß die Kopfplatte (27) eine Lagerschale (28) trägt, innerhalb der die Welle (19) der Trägerplatte (6) drehbar gelagert ist.

20. Montageband nach Anspruch 19,
dadurch gekennzeichnet,
daß in der Lagerschale (28) Kugellager (29) angeordnet sind.

21. Montageband nach mindestens einem der vorhergehenden
Ansprüche 17-20,
dadurch gekennzeichnet, daß der Schlitten (24) mit dem Aktivierungsmitteln (18) für die Linearbewegung in Wirkverbindung stehen.

## Claims

1. Assembly line with work-stations (31-36) situated parallel opposite each other, to which the to-be-assembled object (3) is delivered in accordance with the assembly sequence, wherein two assembly tracks (2,12) of the assembly line running in opposite directions travel along these work-stations situated parallel opposite each other and at least at one end of the assembly line a transfer of the to-be-assembled object (3) is carried out to the opposite situated assembly track which runs in the opposite direction, characterised
in that on the runout platform of the first assembly track a lifting table is provided which removes the to-be-assembled object off the assembly track and can travel approximately transversely, which table is provided with means transforming a linear movement into a rotary one.

2. Assembly line according to claim 1, characterised in that the lifting table has a carrier plate which is connected with the transferring means via a crank lever.

3. Assembly line according to claim 2, characterised in that the carrier plate is mounted on a shaft.

4. Assembly line according to claim 3, characterised in that the crank lever on one of its ends is connected with the shaft which penetrates through the carrier plate and at the other end, at a distance from this shaft, with a guide pin, which engages a control cam of a sliding block.

5. Assembly line according to claim 4, characterised in that the lifting table is provided with linear guiding means.

6. Assembly line according to claim 5, characterised in that the working length of the control cam extends approximately transversely to the assembly tracks along the linear travel path of the lifting table.

7. Assembly line according to claim 6, characterised in that the control cam has a first linear extension range and a first curved section which leads to a peak region and a second curved sector from the peak region leading to a second linear region.

8. Assembly line according to claim 7, characterised in that the circular extension of the first curved sector is positive and is 90°, whereas the circular extension of the second curved sector is constructed negative and is also 90°.

9. Assembly line according to at least one of the claims 4 to 8,characterised in that the control sector of the control cam is 180° over the working length.

10. Assembly line according to at least one of the claims 4 to 9, characterised in that the means of transfer of a linear movement into a rotary one comprises the lifting table with the linear guiding means which can be actuated by an activating medium, the sliding block with the control cam as well as the carrier plate with a shaft and a crank lever with a guide pin.

11. Assembly line according to claim 10, characterised in that the centreline of the shaft has a linear travel path.

12. Assembly line according to at least one of the claims 4 to 11, characterised in that the crank lever accommodates the centreline of the shaft and the pivoting axis that of the guide pin.

13. Assembly line according to claim 12, characterised in that the guide pin and the shaft are provided in or on the crank lever secured against relative rotation.

14. Assembly line according to at least one of claims 4 to 13, characterised in that the distance between the pivoting axis and the centreline of the shaft is a fixed constant.

15. Assembly line according to at least one of the claims 4 to 14, characterised in that the rotary movement of the shaft is proportional relative to the travel path of the guide pin in the control cam.

16. Assembly line according to claim 15, characterised in that the lifting table has a lifting bellows which activates the upward stroke supported by a scissors mechanism.

17. Assembly line according to at least one the claims 10 to 15, characterised in that the lifting table has a carriage, on which carriage the runners are provided, which form the linear guiding means together with the rails provided on the lifting table.

18. Assembly line according to claim 17, characterised in that the carriage has a top plate which is penetrated approximately in the centre by the shaft of the carrier plate.

19. Assembly line according to claim 18, characterised in that the top plate has a bearing block, inside of which the shaft of the carrier plate is rotatably mounted.

20. Assembly line according to claim 19, characterised in that in the bearing block ball bearings are provided.

21. Assembly line according to at least one of the claims 17 - 20, characterised in that the carriage is actively connected with the actuating means for the linear movement.

## Revendications

1. Convoyeur de montage avec postes de montage parallèles et se faisant face (31-36) auxquels sont amenés des objets à monter (3) qu'il convient de traiter conformément aux étapes de montage, où ces postes de montage parallèles et situés les uns en face des autres sont alimentés par deux transporteurs se déplacant en sens inverse l'un par rapport à l'autre (2,12) et appartenant au convoyeur et où, à au moins une des extrémités du convoyeur, a lieu un transfert de l'objet à monter (3) vers le transporteur de sens opposé,
caractérisé en ce que
se trouve à la sortie (1) du premier transporteur (2) une table élévatrice (4) qui sépare l'objet à monter (3) du transporteur (2), qui peut se déplacer de manière approximativement transversale et qui est équipée d'organes (5) permettant de transformer le mouvement linéaire en mouvement rotatif.

2. Convoyeur de montage selon la revendication 1,
caractérisé en ce que
la table élévatrice (4) présente une plaque-support (6) qui agit de concert avec les organes de transformation (5) par l'intermédiaire d'un levier pivotant (7).

3. Convoyeur de montage selon la revendication 2,
caractérisé en ce que
la plaque-support (6) est logée sur un arbre (19) par l'intermédiaire de paliers.

4. Convoyeur de montage selon la revendication 3,
caractérisé en ce que
le levier pivotant (7) porte à l'une de ses extrémités l'arbre (19) pénétrant dans la plaque-support (6) et, à l'extrémité éloignée de cet arbre (19), un tourillon de guidage (9) en prise dans la rainure de commande (8) d'un plateau à coulisse (10).

5. Convoyeur de montage selon la revendication 4,
caractérisé en ce que
la table élévatrice (4) est équipée d'organes de guidage linéaire (11).

6. Convoyeur de montage selon la revendication 5,
caractérisé en ce que
la longueur de travail (L) de la rainure de commande (8) correspond approximativement au déplacement linéaire de la table élévatrice (4), à la transversale des transporteurs de montage (2, 12).

7. Convoyeur de montage selon la revendication 6,
caractérisé en ce que
la rainure de commande (8) comporte une première section linéaire (13) et une première section courbe (14) menant à un sommet (15) ainsi qu'une seconde section courbe (16) partant du sommet (15) et menant à la section linéaire (17).

8. Convoyeur de montage selon la revendication 7,
caractérisé en ce que
la première section courbe (14) a une extension circulaire positive de 90° C tandis que l'extension circulaire de la seconde section courbe (16) est également de 90° C, mais négative.

9. Convoyeur de montage selon au moins une des revendications 4 à 8,
caractérisé en ce que
la section de commande sur la longueur de travail (L) de la rainure de commande (8) est de 180° C.

10. Convoyeur de montage selon au moins une des revendications 4 à 9,
caractérisé en ce que
les organes (5) permettant de transformer le mouvement linéaire en mouvement rotatif sont constitués de la table élévatrice (4) qui peut être équipée d'organes de guidage linéaire (11) par l'intermédiaire d'un activateur (18), du plateau à coulisse (10) avec la rainure de commande (8) ainsi que de la plaque-support (6) avec l'arbre (19) et le levier pivotant (7) présentant un tourillon de guidage.

11. Convoyeur de montage selon la revendication 10,
caractérisé en ce que
l'axe médian (20) de l'arbre (19) a un déplacement linéaire (S).

12. Convoyeur de montage selon au moins une des revendications 4 à 11,
caractérisé en ce que
le levier pivotant (7) reçoit l'axe médian (20) de l'arbre (19) et l'axe de pivotement (21) du tourillon de guidage (9).

13. Convoyeur de montage selon la revendication 12,
caractérisé en ce que
le tourillon de guidage (9) et l'arbre (19) sont placés sur le levier de pivotement (7) de telle manière qu'ils ne risquent pas de subir des effets de torsion.

14. Convoyeur de montage selon au moins une des revendications 4 à 13,
caractérisé en ce que
la distance (A) entre l'axe de pivotement (21) et l'axe médian (20) de l'arbre (19) demeure constante.

15. Convoyeur de montage selon au moins une des revendications 4 à 14,
caractérisé en ce que
le mouvement de rotation décrit par l'arbre (19) est proportionnel au déplacement du tourillon de guidage (9) dans la rainure de commande (8) .

16. Convoyeur de montage selon la revendication 15,
caractérisé en ce que
la table élévatrice (4) présente un soufflet de levage (22) qui, conjugué à un élément en ciseau (23), déclenche la course ascendante.

17. Convoyeur de montage selon au moins une des revendications 10 à 15,
caractérisé en ce que
la table élévatrice (4) comporte un chariot (24) auquel est fixé un patin (26) constitué des organes de guidage linéaire (11) et des rails (25) montés sur la table élévatrice.

18. Convoyeur de montage selon la revendication 17,
caractérisé en ce que
le chariot (24) possède une plaque de recouvrement (27) qui est percée approximativement en son milieu par l'arbre (19) de la plaque-support (6).

19. Convoyeur de montage selon la revendication 18,
caractérisé en ce que
la plaque de recouvrement (27) porte une coquille de coussinet (28) dans laquelle est logé l'arbre (19) de la plaque-support (6) qui peut y effectuer des rotations.

20. Convoyeur de montage selon la revendication 19,
caractérisé en ce que
des paliers à roulement à billes (29) sont placés dans la coquille à coussinet (28).

21. Convoyeur de montage selon au moins une des revendications 17 à 20,
caractérisé en ce que
le chariot (24) agit avec les activateurs (18) pour provoquer le déplacement linéaire.
